# FASCICULE DE BREVET EUROPEEN

(11) **EP 3 627 144 B1**
(45) Date de publication et mention de la délivrance du brevet: **01.11.2023**
(21) Numéro de dépôt: 19198148.9
(22) Date de dépôt: 18.09.2019
(51) Int. Cl.: G01N 21/952, A63B 29/02, D07B 1/14, B66B 7/12, G01L 5/102

(54) **PROCEDE DE VERIFICATION D'UNE CORDE**
ÜBERPRÜFUNGSVERFAHREN EINES SEILS
METHOD FOR CHECKING A ROPE

(30) Priorité: 20.09.2018 FR 1858544
(43) Date de publication de la demande: 25.03.2020
(73) Titulaire: Commissariat à l'Énergie Atomique et aux Énergies Alternatives, 75015 Paris (FR)
(72) Inventeur: DANIELE, Norbert, 38054 GRENOBLE cedex 09 (FR)
(74) Mandataire: Germain Maureau

(56) Documents cités:
- EP-A1- 0 849 208
- EP-A1- 3 299 331
- WO-A1-2019/072845
- DE-U1-202016 002 171
- US-A1- 2003 111 298
- US-A1- 2008 105 059
- US-A1- 2008 185 221

## Description

### Domaine technique de l'invention

Le domaine technique de l'invention concerne le domaine des cordes, et notamment de la vérification des cordes pour déterminer si elles sont détériorées ou non. Plus particulièrement, l'invention concerne un procédé de vérification d'une corde.

### État de la technique

Lors de l'escalade d'une paroi, aussi appelée voie d'escalade, il est commun d'assurer une personne, appelée « grimpeur », via une corde notamment dynamique. Le rôle de cette corde est d'alors de réduire au mieux l'énergie transmise au grimpeur lors de l'arrêt d'une chute du grimpeur. Pour assurer le grimpeur, la corde coopère avec un dispositif d'assurage permettant de contrôler le défilement de la corde. Il est connu que la longueur de la corde évolue au cours du vieillissement de la corde, par exemple elle peut se rétracter. La rétractation peut être telle que la corde peut perdre plus de 10% de sa longueur totale initiale. En fonction du degré de rétractation de la corde, cela peut avoir des conséquences dramatiques lors de l'escalade d'une voie où le grimpeur pensait disposer d'une longueur suffisante alors que cela n'est pas le cas. Par ailleurs, la capacité de la corde vieillissante à réduire l'énergie transmise au grimpeur en cas de chute peut diminuer. Ainsi, pour améliorer la sécurité lors de l'utilisation de la corde, il est connu de faire vérifier la corde par une personne en inspectant la corde visuellement pour savoir si la corde est encore fiable ou non. L'inspection visuelle a ses limites liées au jugement de la personne qui inspecte la corde. Un moyen efficace de vérifier la corde est d'effectuer un test destructif de la corde sur plusieurs mètres, cependant, il est difficile de trouver une personne prête à sacrifier une partie de sa corde pour savoir si elle est encore fiable ou non.

Par ailleurs, il existe des règles de stockage et de changement de corde en fonction de sa fréquence d'utilisation, notamment donnée en nombre de jours par an. Il faut aussi savoir que même non utilisée et stockée dans de bonnes conditions, les caractéristiques physico-chimiques de la corde évoluent dans le temps jusqu'à un état d'usure tel qu'il est déconseillé de l'utiliser : pour respecter cette règle de longévité de la corde, il est connu de stocker la date de fabrication de la corde dans une puce de radio-identification intégrée à la corde, cette puce de radio-identification pouvant aussi contenir la référence de la corde.

En ce sens, il existe un besoin d'améliorer les techniques existantes de vérification, notamment de fiabilité ou d'état de la corde, et en particulier sans avoir recours à la destruction de la corde.

La demande de brevet US 2003/0111298 A1 décrit l'utilisation de marqueurs visuels espacés. L'espacement entre au moins deux des marqueurs change en réponse à un changement d'état d'un ensemble porteur pour système d'ascenseur. EP3299331 A1 décrit un câble en fibre, système de levage avec un tel câble, et une méthode pour faire fonctionner ce système de levage. EP0849208 A1 décrit une méthode et appareil d'inspection des câbles de levage. Le document WO2019072845 A1, qui a été publié le 18.04.2019, décrit un câble de levage intelligent.

### Objet de l'invention

L'invention a pour but d'améliorer et de faciliter la vérification d'une corde pour en déterminer son état, par exemple pour savoir si cette dernière est encore fiable en particulier pour son utilisation dans le cadre de l'assurage d'un grimpeur escaladant une paroi. La solution à ce problème est proposé au moyen d'un procédé selon l'objet de la revendication 1.

On tend vers ce but grâce à un procédé de vérification d'une corde, ce procédé de vérification comportant :
- une étape de détermination d'informations relatives à la corde par un dispositif de vérification comportant une unité électronique, au moins deux des informations déterminées étant issues d'une coopération de l'unité électronique avec respectivement deux portions différentes de la corde,
- une étape de détermination d'un état de la corde en prenant en compte les informations déterminées.

Un tel procédé de vérification présente l'avantage de mettre en oeuvre une vérification électronique de la corde. Une telle vérification est bien plus fiable qu'une simple inspection visuelle : la vérification de la corde permettant d'en déterminer son état est ainsi améliorée. Par ailleurs, cette vérification ne nécessite pas de détruire une partie de la corde. De préférence, le fait qu'au moins deux des informations déterminées soit respectivement associées à, notamment déterminées à partir de, deux portions différentes de la corde présente l'avantage d'avoir un certain nombre d'informations déterminées relatives à la corde à utiliser pour obtenir l'état de la corde.

Le procédé de vérification est tel que :
∘ la corde comporte une pluralité de portions différentes ayant une même longueur théorique,
∘ l'étape de détermination d'informations relatives à la corde comporte une étape de détermination de longueurs effectives de portions différentes de même longueur théorique en tant qu'informations relatives à la corde.

Le procédé de vérification peut en outre comporter une ou plusieurs des caractéristiques suivantes :
- l'étape de détermination de l'état de la corde comporte une étape de comparaison des longueurs effectives déterminées par rapport à la longueur théorique de sorte que l'état déterminé de la corde est un état de détérioration de la corde lorsqu'il résulte qu'une ou plusieurs des longueurs effectives déterminées présentent un écart, par rapport à la longueur théorique, strictement supérieur à une valeur prédéterminée ;
- le procédé de vérification est tel que :
   ∘ N longueurs effectives sont déterminées, avec N un entier positif supérieur ou égal à 2,
   ∘ l'étape de détermination de l'état de la corde comporte une étape de détermination d'un écart entre la somme des N longueurs effectives déterminées et N fois la longueur théorique, l'état déterminé de la corde étant un état de détérioration de la corde lorsque l'écart est strictement supérieur à une valeur prédéterminée, de préférence la valeur prédéterminée étant égale à 10% de N fois la longueur théorique ;
- au moins une des informations déterminées est un diamètre de la corde mesuré par l'unité électronique, et l'état déterminé de la corde est un état de détérioration de la corde lorsque le diamètre mesuré est représentatif d'une usure de la corde ;
- l'étape de détermination des informations relatives à la corde comporte une étape de sondage de la corde de sorte à acquérir au moins une donnée dépendante de l'état de la corde en tant qu'information relative à la corde, l'état déterminé de la corde étant un état de détérioration lorsque l'étape de sondage met en avant une usure de la structure interne de la corde ;
- l'étape de détermination d'informations relatives à la corde est mise en oeuvre après une période de repos de la corde ;
- la corde est utilisée à plusieurs reprises de telle sorte que la corde défile par rapport à l'unité électronique à chaque nouvelle utilisation de la corde, et l'unité électronique met en oeuvre une étape de comparaison d'une durée minimale de période de repos avec une durée de séparation entre la dernière utilisation de la corde et la nouvelle utilisation de la corde d'où il résulte l'inhibition de la mise en oeuvre de l'étape de détermination d'informations relatives à la corde si ladite durée de séparation est strictement inférieure à la durée minimale de période de repos ;

L'invention est aussi relative à un dispositif de vérification d'une corde, selon l'objet de la revendication 8, ledit dispositif de vérification comportant une unité électronique apte à coopérer avec la corde de telle sorte que le dispositif de vérification est configuré pour :
- déterminer des informations relatives à la corde telles qu'au moins deux des informations déterminées sont issues d'une coopération de l'unité électronique avec respectivement deux portions différentes de la corde,
- déterminer un état de la corde en prenant en compte les informations déterminées.

Le dispositif comportant les moyens nécessaires pour la mise en oeuvre de l'étape de détermination d'informations relatives à la corde et de l'étape de détermination de l'état de la corde d'un procédé de vérification selon l'une quelconque des revendications de procédé, l'unité électronique comportant un lecteur de marqueurs appartenant à la corde, ledit lecteur de marqueurs étant un lecteur de radio-identification.

Avantageusement, l'unité électronique comporte :
- un galet de mesure de longueur agencé pour être entraîné en rotation par la corde lors d'un défilement de la corde par rapport à l'unité électronique,
l'unité électronique étant configurée pour :
- déclencher une mesure, par le galet de mesure, d'une longueur effective d'une portion de la corde lors de la détection d'un premier marqueur de la corde, et
- stopper cette mesure de distance lors de la détection d'un deuxième marqueur de la corde,
la portion de la corde s'étendant entre les premier et deuxième marqueurs.

L'invention est aussi relative à un dispositif pour chaîne d'assurage d'une charge à l'aide d'une corde, selon l'objet de la revendication 10, le dispositif pour chaîne d'assurage comportant un passage pour la corde et un dispositif de vérification de la corde tel que décrit.

D'autres avantages et caractéristiques pourront ressortir clairement de la description détaillée qui va suivre.

### Description sommaire des dessins

L'invention sera mieux comprise à la lecture de la description détaillée qui va suivre de modes de réalisation de l'invention, donnée uniquement à titre d'exemple non limitatif et faite en se référant aux dessins annexés dans lesquels :
- la figure 1 illustre schématiquement des étapes d'un procédé de vérification d'une corde combinant plusieurs modes de réalisation selon l'invention, ces étapes sont représentées sous la forme d'un organigramme ;
- la figure 2 illustre schématiquement un mode de réalisation selon l'invention d'un dispositif de vérification de la corde coopérant avec la corde ;
- la figure 3 représente la figure 2 pour laquelle une coupe du dispositif de vérification a été réalisée parallèlement à la corde, sur la figure 3 la corde n'est pas représentée en coupe pour faciliter la compréhension de la figure 3 ;

- la figure 4 illustre un autre mode de réalisation selon l'invention du dispositif de vérification dont une partie est représentée en coupe pour montrer la coopération de cette partie avec la corde ;
- la figure 5 illustre trois parties de la corde utilisée selon une réalisation de l'invention, ces trois parties correspondant à deux extrémités longitudinales opposées de la corde et à une partie de la corde centrée sur le milieu de la corde ;
- la figure 6 illustre encore un autre mode de réalisation du dispositif de vérification coopérant avec la corde ;
- les figures 7 à 9 illustrent le dispositif de vérification intégré à un dispositif d'assurage selon un mode de réalisation particulier de ce dispositif d'assurage, les figures 7 et 9 sont des vues en perspective montrant deux positions différentes d'un organe mobile appartenant au dispositif d'assurage, et la figure 8 est une vue représentant schématiquement une coupe du dispositif d'assurage de la figure 7 ;
- la figure 10 illustre le dispositif d'assurage vu en perspective selon un autre mode de réalisation.

Dans ces figures, les mêmes références sont utilisées pour désigner les mêmes éléments.

### Description détaillée

Il est décrit ci-après un procédé de vérification d'une corde permettant d'améliorer la sécurité lors de l'utilisation de la corde, en particulier quand la corde est une corde d'assurage. Une corde d'assurage est destinée à assurer une charge comme par exemple une personne appelée grimpeur dans le domaine de l'escalade. De préférence, par « utilisation de la corde », il est entendu une utilisation pour assurer la charge et/ou le cas échéant pour vérifier la corde. Dans la présente description, la notion « d'assurage » correspond à toute technique permettant notamment d'assurer la charge évoluant en hauteur, cette charge étant reliée à la corde par exemple à l'aide d'un noeud formé à partir de la corde. Notamment, la corde est une corde dynamique permettant d'absorber les chocs en cas de chute de la charge, en particulier lorsque la charge est un grimpeur. Classiquement, une corde peut comporter une âme comportant des brins, et l'âme est entourée par une gaine de la corde servant notamment à protéger l'âme. Selon un exemple, la corde, notamment d'escalade, peut présenter une longueur de plusieurs dizaines de mètres, par exemple cette longueur de la corde peut être comprise entre 50 m et 100 m pour un diamètre de la corde pouvant être compris entre 8,5 mm et 11 mm notamment dans le cas d'une corde à simple.

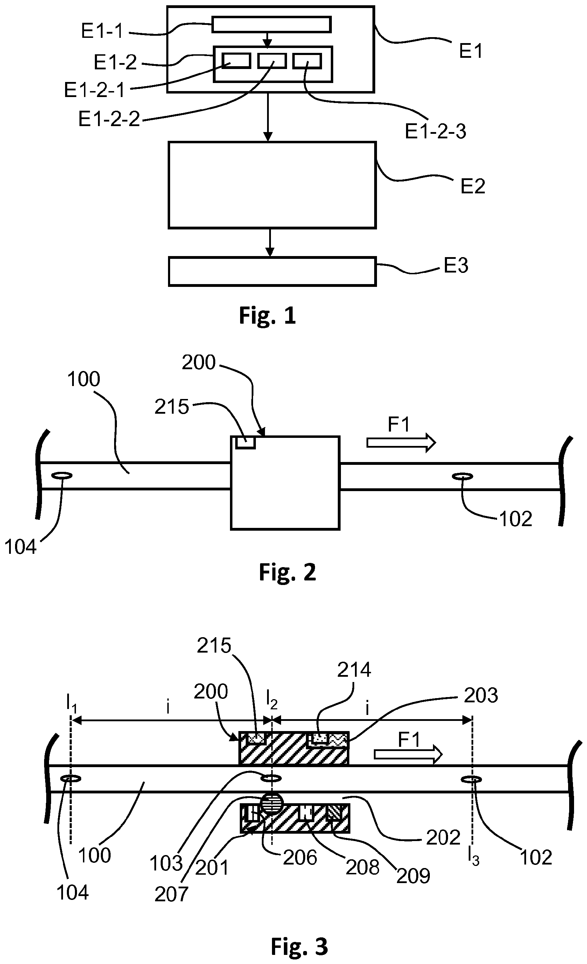

L'invention est relative au procédé de vérification de la corde 100, notamment pour déterminer un état de la corde 100 en utilisant notamment un dispositif de vérification 200 comportant une unité électronique 201 (voir par exemple en figures 1 à 4). Le dispositif de vérification 200 est aussi appelé dispositif de vérification 200 de la corde 100, et est notamment configuré de sorte à vérifier la corde 100 pour en déterminer l'état, par exemple pour vérifier la fiabilité de la corde 100. Un tel procédé de vérification comporte une étape E1 de détermination d'informations relatives à la corde 100 par le dispositif de vérification 200 comportant l'unité électronique 201, au moins deux des informations déterminées relatives à la corde 100 étant issues d'une coopération de l'unité électronique 201 avec respectivement deux portions différentes de la corde 100. Autrement dit, par « au moins deux des informations déterminées relatives à la corde 100 sont issues d'une coopération de l'unité électronique 201 avec respectivement deux portions différentes de la corde 100 », il est entendu que l'une desdites deux informations déterminées est une « première information » issue de la coopération de l'unité électronique 201 avec une première portion de la corde 100 et que l'autre desdites deux informations déterminées est « une deuxième information » issue de la coopération de l'unité électronique 201 avec une deuxième portion de la corde 100 différente de la première portion de la corde 100. Par la suite le terme « portion » désigne une portion de la corde.

Par deux portions différentes, il est entendu que les deux portions différentes peuvent être telles que :
- elles sont successives, ce cas peut s'appliquer dans le cadre de la détermination de longueurs effectives de portions différentes (notamment lorsque les portions sont formées dans la continuité l'une de l'autre) comme cela sera décrit ci-après, notamment pour le premier mode de réalisation, ou dans le cadre du deuxième mode de réalisation ou dans le cadre du troisième mode de réalisation,
- une partie de l'une des deux portions peut former l'autre des deux portions : l'une des deux portions est incluse dans l'autre des deux portions, ce cas peut s'appliquer par exemple lorsqu'il est réalisé au sein d'une portion de la corde dont la longueur effective est déterminée, une mesure de diamètre de la corde, ou un sondage de la structure interne de la corde (ceci peut par exemple correspondre à la combinaison des premier et deuxième modes de réalisation, ou des premier et troisième modes de réalisation, décrits ci-après).

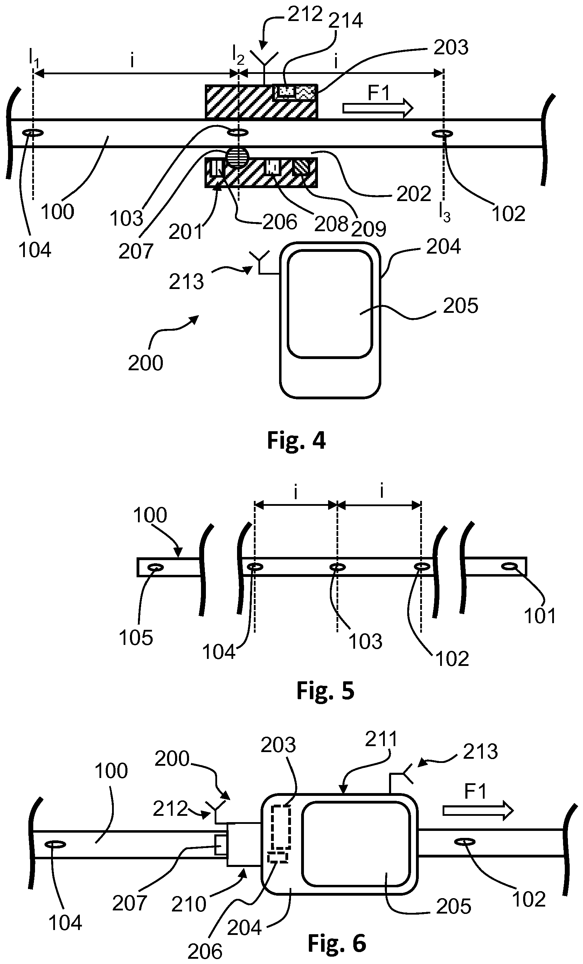

De préférence, au cours du procédé de vérification, la corde 100 défile par rapport à l'unité électronique 201 pour permettre la mise en oeuvre de la coopération de l'unité électronique 201 avec les deux portions différentes de la corde 100. Autrement dit, le défilement de la corde 100 par rapport à l'unité électronique 201 permet une coopération de l'unité électronique 201 avec la corde 100, cette coopération permettant de déterminer chacune des informations relatives à la corde 100. Plus particulièrement, la corde 100 coulisse/défile dans le dispositif de vérification 200, et plus particulièrement dans une ouverture 202 (c'est-à-dire un trou débouchant 202) du dispositif de vérification 200 (figures 3 et 4), et c'est lorsque les portions de la corde 100 passent par l'ouverture 202 que ces portions de la corde 100 coopèrent avec l'unité électronique 201. L'utilisation de l'ouverture 202 pour le passage de la corde 100 permet d'assurer que la coopération entre l'unité électronique 201 et la corde 100 soit de bonne qualité, notamment en permettant de maintenir une distance adaptée entre l'unité électronique 201 et la corde 100 au cours du défilement de la corde 100 par rapport à cette unité électronique 201. Le but de cette étape E1 de détermination d'informations relatives à la corde 100 est de déterminer des informations relatives à la corde 100 pertinentes à prendre en compte dans le cadre de la vérification de la corde 100 pour déterminer l'état de la corde 100. Le fait de déterminer des informations relatives à la corde 100 pour deux portions différentes de la corde 100 permet une analyse plus fine de la corde 100 en vue de déterminer l'état de la corde 100. Par ailleurs, plus le nombre d'informations déterminées est important, plus l'état déterminé de la corde 100 en utilisant ces informations déterminées est fiable : la sécurité lors de l'utilisation de la corde 100 augmente car elle a pu être vérifiée convenablement. La coopération de la corde 100 avec l'unité électronique 201 permet aux informations relatives à la corde 100 d'être déterminées de manière électronique, notamment à partir de données mesurées/acquises par l'unité électronique 201, évitant les aléas liés aux limites de la simple inspection visuelle. Ainsi, par « coopération de l'unité électronique 201 avec une portion de la corde », il est notamment entendu une « mesure » réalisée par l'unité électronique 201, c'est-à-dire que chaque information déterminée peut correspondre à une mesure, réalisée par l'unité électronique 201 ou plus généralement par le dispositif de vérification 200, d'un paramètre physique d'une portion correspondante de la corde 100. Ce paramètre physique est, comme il le sera vu par la suite, une longueur effective de la portion. Par la suite, lorsqu'il est fait référence à une ou des informations déterminées, il s'agit bien entendu de celles relatives à la corde 100 et déterminées par l'étape E1.

Bien entendu, le procédé de vérification comporte une étape E2 de détermination de l'état de la corde 100 en prenant en compte les informations déterminées (figure 1). Par la suite, « l'état déterminé » fait référence à « l'état déterminé de la corde 100 » L'état déterminé présente alors l'avantage d'être obtenu de manière automatisée à l'aide des informations déterminées par l'unité électronique 201.

L'état de la corde 100 peut notamment être choisi entre un premier état et un deuxième état. Dans le premier état, la corde 100 est considérée comme intègre, c'est-à-dire qu'elle est fiable, et peut être utilisée. Dans le deuxième état, aussi appelé état de détérioration, la corde 100 est considérée comme détériorée/usée, c'est-à-dire que son utilisation peut présenter un risque de sécurité, et qu'il faut préférentiellement ne plus l'utiliser.

L'état de la corde 100 est un état d'indication de la modification de la longueur effective de la corde 100 par rapport à sa longueur théorique. Ainsi, le procédé de vérification est tel que les informations déterminées permettent à l'étape E2 de déterminer l'état d'indication de la modification de la longueur effective de la corde 100 par rapport à sa longueur théorique. La longueur théorique de la corde 100 correspond à sa longueur au terme de sa fabrication. La longueur effective de la corde 100 correspond à sa longueur réelle à l'instant où elle est mesurée. Cet état d'indication de la modification de la longueur effective de la corde 100 par rapport à sa longueur théorique, ainsi qu'une quantification de cette modification peuvent être communiqués à l'utilisateur de la corde (par exemple le grimpeur et/ou l'assureur) afin qu'il connaisse la longueur réelle de sa corde pour l'utiliser de manière adéquat.

L'état de la corde 100 peut être un état indiquant qu'une moitié de la corde 100 selon sa longueur est plus utilisée que l'autre moitié de la corde 100. Ainsi, le procédé de vérification 2. est tel que les informations déterminées permettent à l'étape E2 de déterminer l'état indiquant qu'une moitié de la corde 100 selon sa longueur est plus utilisée que l'autre moitié de la corde 100. Ceci permet d'informer l'utilisateur qu'une moitié de sa corde 100 risque de s'user plus rapidement que l'autre : il est ainsi possible d'indiquer à l'utilisateur d'adapter son utilisation de la corde 100 pour augmenter la durée de vie de la corde 100, par exemple en homogénéisant l'utilisation des deux moitiés de la corde 100.

Bien entendu l'étape E2 peut être telle que sa mise en oeuvre permet de déterminer un ou plusieurs des états de la corde décrits ci-dessus à partir des informations déterminées par l'étape E1.

Il résulte de ce qui a été décrit ci-dessus que l'unité électronique 201 comporte les moyens nécessaires à l'acquisition de données servant ensuite à déterminer les informations relatives à la corde 100. Notamment, ces informations relatives à la corde 100 sont déterminées (étape E1) par une unité de traitement 203, aussi appelée unité de traitement de données, du dispositif de vérification 200 (voir figures 3 et 4). Une telle unité de traitement 203 peut comporter un code logiciel comportant une fonction prenant en entrée les données acquises par l'unité électronique 201 et donnant en sortie les informations déterminées. En ce sens, l'unité de traitement 203 peut comporter les moyens, comme par exemple un processeur, permettant d'exécuter le code logiciel et plus particulièrement des instructions du code logiciel. Le processeur peut être configuré pour mettre en oeuvre l'étape E1 de détermination des informations relatives à la corde 100.

Par ailleurs, le code logiciel peut comporter une autre fonction prenant en entrée les informations déterminées et donnant en sortie l'état de la corde 100. Le processeur peut donc être configuré pour mettre en oeuvre l'étape E2 de détermination de l'état de la corde 100.

L'étape E2 de détermination de l'état de la corde 100 est mise en oeuvre par le dispositif de vérification 200, et plus particulièrement par l'unité de traitement 203 du dispositif de vérification 200.

Sur les figures 3 et 4, l'unité de traitement 203 est intégrée à l'unité électronique 201, les étapes E1 et E2 peuvent notamment alors être mises en oeuvre par l'unité électronique 201.

Sur la figure 4, le dispositif de vérification 200 comporte un téléphone intelligent 204 (« smartphone » en langue anglaise) connecté par liaison sans fil à l'unité électronique 201, dans ce cas le téléphone intelligent 204 peut comporter une application permettant de diffuser un signal, par exemple par affichage via son écran 205, représentatif de l'état déterminé. Les étapes E1 et E2 sont alors préférentiellement mises en oeuvre par l'unité de traitement 203 intégrée à l'unité électronique 201, et l'état déterminé par l'unité de traitement 203 est alors transmis par la liaison sans fil au téléphone intelligent 204 en vue de sa diffusion. Pour réaliser la liaison sans fil, par exemple de type BLE (« Bluetooth Low Energy » pour Bluetooth à basse consommation), l'unité électronique 201 peut comporter un émetteur 212 et le téléphone intelligent 204 un récepteur 213.

Dans la présente description, un téléphone intelligent 204 est un dispositif combinant un téléphone et un ordinateur de poche.

Il résulte de ce qui a été décrit ci-dessus que l'étape E1 de détermination des informations relatives à la corde 100 peut comporter une étape E1-1 d'acquisition de données, notamment par l'unité électronique 201, ces données acquises étant résultantes de la coopération entre la corde 100 (notamment de ses portions) et l'unité électronique 201. L'étape E1 de détermination des informations relatives à la corde 100 peut aussi comporter une étape E1-2 de traitement des données acquises, notamment mise en oeuvre par l'unité de traitement 203, d'où il résulte la détermination des informations relatives à la corde 100. Selon les cas, le traitement des données acquises par l'unité de traitement 203 peut être tel qu'une donnée correspond à une des informations relatives à la corde 100 (cette donnée peut alors permettre la détermination de cette information relative à la corde), ou que plusieurs données acquises sont utilisées pour déterminer une des informations relatives à la corde 100.

Sur les figures 2 à 4, la corde 100 défile dans l'ouverture 202, et le sens de défilement de la corde 100 est représenté par la flèche F1. Ainsi, la coopération entre la corde 100 et l'unité électronique 201 est notamment telle que le procédé de vérification comporte une étape de défilement de la corde 100 par rapport l'unité électronique 201. En particulier, les données acquises au cours de l'étape E1-1 d'acquisition le sont au cours de l'étape de défilement de la corde 100.

Comme il le sera décrit plus en détails ci-après, les informations relatives à la corde 100 concernent une longueur effective d'une portion de la corde 100. Les informations déterminées sont notamment utilisées par l'étape E2 pour quantifier l'usure de la corde 100 en vue de déterminer si la corde est en état de détérioration ou non.

Il résulte de ce qui a été décrit ci-dessus que l'invention est aussi relative au dispositif de vérification 200 de la corde 100, ce dispositif de vérification 200 comportant l'unité électronique 201 apte, notamment configurée de sorte, à coopérer avec la corde 100 de telle sorte que le dispositif de vérification 200 est configuré pour :
- déterminer, notamment lors de la coopération entre la corde 100 et l'unité électronique 201, les informations relatives à la corde 100 telles qu'au moins deux des informations déterminées sont issues d'une coopération de l'unité électronique 201 avec respectivement deux portions différentes de la corde 100,
- déterminer l'état de la corde 100 en prenant en compte les informations déterminées.
Ceci permet de vérifier efficacement une corde. Autrement dit, le dispositif de vérification 200 comporte les moyens nécessaires pour la mise en oeuvre d'étapes, notamment les étapes E1 et E2, du procédé de vérification. Notamment, le dispositif de vérification 200 comporte l'unité électronique 201 configurée pour acquérir des données par coopération avec la corde 100, et l'unité de traitement 203 configurée pour déterminer les informations relatives à la corde 100 à partir des données acquises par l'unité électronique 201 et pour déterminer l'état de la corde 100.

Comme évoqué dans la partie état de la technique, la longueur de la corde 100 est susceptible d'évoluer dans le temps et en fonction de la fréquence d'utilisation de la corde 100. La fréquence d'utilisation peut être un nombre de jours d'utilisation par an de la corde 100. La corde 100 a une longueur, dite « longueur théorique » de la corde, il s'agit notamment comme évoqué précédemment de sa longueur effective en sortie d'usine de fabrication, c'est-à-dire au terme de sa fabrication. Une longueur effective est de manière générale une longueur réelle mesurable/mesurée à un instant donné. Au fur et à mesure du temps et des utilisations de la corde 100, la longueur effective de la corde 100 va dévier de sa longueur théorique. Par exemple, si l'écart entre la longueur effective de la corde 100 et la longueur théorique de la corde 100 dépasse une valeur prédéterminée, alors la corde 100 peut être considérée comme dangereuse pour la charge dans le cadre de son assurage. Par exemple, en particulier dans le domaine de l'escalade, un écart strictement supérieur à 10% entre la longueur théorique de la corde 100 et la longueur effective de la corde 100 au repos, ou lors d'une première utilisation de la corde 100 après une période de repos de la corde 100, peut être représentatif d'une corde altérée, et dans ce cas il est préférable d'en avertir l'utilisateur par exemple à l'aide de la détermination du deuxième état de la corde 100. Par « au repos », ou « période de repos », il est entendu ici un temps minimal d'inutilisation de la corde 100 par exemple compris entre 1 heure et 4 heures permettant à la corde 100 de reprendre sa forme après avoir été sollicitée. En ce sens, on comprend qu'il existe un besoin de vérifier la fiabilité de la corde 100 en prenant en compte la variation de sa longueur effective par rapport à sa longueur théorique. Le premier mode de réalisation décrit ci-après tend à satisfaire ce besoin, de préférence en utilisant des longueurs effectives de portions de la corde 100 pour déterminer, notamment au cours de l'étape E2 de détermination de l'état de la corde 100, un indicateur d'usure relatif à la longueur de la corde. Selon ce premier mode de réalisation, la corde 100 comporte une pluralité de portions différentes ayant une même longueur théorique, ces portions différentes de même longueur théorique s'étendant selon la longueur de la corde 100. Ces portions différentes de même longueur théorique sont notamment successives. Par exemple, en figures 3 et 4, il est représenté deux portions différentes successives de corde 100, ces deux portions de longueur théorique i s'étendant respectivement entre le couple de lignes en pointillé l1 et l₂ et le couple de lignes en pointillé l₂ et l₃. Par portions différentes de même longueur théorique, il est considéré que ces portions présentent chacune, selon la longueur de la corde 100, une longueur théorique, et que les longueurs théoriques des différentes portions correspondantes sont identiques. Cette longueur théorique des portions de la corde 100 peut être une norme, valable pour toutes les cordes, ceci facilitant la mise en oeuvre du procédé de vérification pour différentes cordes. Alternativement, la longueur théorique des portions de la corde 100 peut être stockée dans la corde 100, comme il le sera vu par la suite. Autrement dit, la longueur théorique des portions de la corde 100 est prédéterminée, c'est-à-dire connue. Par exemple, la longueur théorique des portions (c'est-à-dire de chaque portion) de la corde 100 correspond à la longueur effective de ces portions (c'est-à-dire de chacune de ces portions) de la corde 100 lorsque la corde est neuve, c'est-à-dire en sortie d'usine. La longueur théorique des portions de la corde 100 peut être comprise entre 0,5 m et 1,5 m, par exemple égale à 1 m. Par ailleurs, l'étape E1 de détermination d'informations relatives à la corde 100 comporte (figure 1) une étape E1-2-1 de détermination de longueurs effectives de portions différentes de même longueur théorique en tant qu'informations relatives à la corde 100. Le cas échéant, tout ou partie des informations déterminées relatives à la corde 100 peuvent être des longueurs effectives de portions de la corde 100. L'étape E1-2 comporte notamment cette étape E1-2-1. Ceci a pour effet d'avoir à disposition, pour déterminer ensuite l'état de la corde 100, des longueurs effectives déterminées de portions de la corde 100 (par exemple celles entre le couple de lignes en pointillé l1 et l₂ et le couple de lignes en pointillé l₂ et l₃ des figures 3 et 4) qui peuvent ensuite être utilisées pour en déduire si la corde 100 a subi une modification de sa longueur effective par rapport à sa longueur théorique telle qu'elle n'est plus considérée comme fiable. Un avantage de déterminer des longueurs effectives de portions associées à une même longueur théorique est qu'il n'est pas nécessaire de mesurer la longueur totale de la corde 100 : en connaissant la longueur théorique des portions de la corde 100 et la longueur effective de plusieurs portions de même longueur théorique, il est possible d'en déduire un allongement ou un rétrécissement de la corde 100 tout en limitant la durée de mise en oeuvre du procédé de vérification. Un autre avantage est que la coopération entre la corde 100, notamment entre les portions de longueur théorique, et l'unité électronique 201 permettant de déterminer les informations relatives à la corde 100 peut être réalisée au cours d'une étape d'assurage de la charge, par exemple au cours d'une séance d'escalade lorsque la charge est le grimpeur. Par exemple, pour escalader une falaise de 20 mètres en ayant à sa disposition une corde de 60 mètres, les informations déterminées le sont, après une période de repos de la corde 100, pour les 20 premiers mètres ayant coopérés avec l'unité électronique 201 au cours de la montée du grimpeur lors du passage de la corde 100 dans un dispositif d'assurage comportant notamment l'unité électronique 201 comme cela sera vu par la suite. En déterminant la longueur effective pour plusieurs portions de longueur théorique connue, il est possible :
- d'obtenir une estimation quant à la modification de la longueur de la corde 100 par rapport à sa longueur théorique, ou
- d'obtenir une représentation de l'allongement ou du rétrécissement de la corde 100 par rapport à sa longueur théorique.

Selon une réalisation de ce premier mode de réalisation, l'étape E2 de détermination de l'état de la corde 100 comporte une étape de comparaison des longueurs effectives déterminées de portions de la corde 100 par rapport à la longueur théorique de ces portions de la corde 100, de préférence de sorte que l'état déterminé de la corde 100 est l'état de détérioration (le deuxième état) de la corde 100 lorsqu'il résulte qu'une ou plusieurs des longueurs effectives déterminées de portions de la corde 100 présentent un écart, par rapport à la longueur théorique des portions, strictement supérieur à une valeur prédéterminée, de préférence la valeur prédéterminée est égale à 10% de la longueur théorique des portions de la corde 100. Cette valeur prédéterminée peut être stockée dans un ou plusieurs marqueurs de radio-identification de la corde 100 tels que décrits ci-après de manière à être récupérée par l'unité électronique 201 pour être utilisée. Lorsque l'état déterminé est le deuxième état, la corde 100 est à changer. Dans le cas contraire, l'état déterminé peut être le premier état. Ceci permet de détecter efficacement une corde non fiable. De manière plus générale, il résulte que l'état de détérioration est déterminé par l'étape E2 lorsque qu'il résulte de l'étape de comparaison la détection d'une modification de la longueur de la corde 100 représentative d'une corde usée. L'écart correspond à une valeur positive représentative de la différence entre une longueur théorique et une longueur effective d'une même portion de la corde 100. En complément, l'état de la corde 100 peut être le premier état si chaque longueur effective déterminée de portion de la corde 100 présente un écart strictement inférieur à 5% de la longueur théorique des portions de la corde 100 : la corde 100 peut être utilisée. Par ailleurs, l'état de la corde 100 peut être un état dit « à surveiller » lorsqu'une ou plusieurs des longueurs effectives déterminées de portions de la corde 100 présentent un écart compris entre 5% et 10% (bornes incluses) de la longueur théorique des portions de la corde 100. Bien entendu, ces écarts sont indicatifs et peuvent être à affiner en fonction des caractéristiques de la corde 100.

En alternative, selon une autre réalisation de ce premier mode de réalisation, N longueurs effectives de portions de la corde 100 sont déterminées par l'étape E1-2-1, avec N un entier positif supérieur ou égal à 2. L'étape E2 de détermination de l'état de la corde 100 comporte une étape de détermination d'un écart entre la somme des N longueurs effectives déterminées de portions de la corde 100 et N fois la longueur théorique des portions de même longueur théorique, l'état déterminé peut être l'état de détérioration de la corde 100 lorsque l'écart est strictement supérieur à une valeur prédéterminée, de préférence la valeur prédéterminée est égale à 10% de N fois la longueur théorique. Dans le cas contraire, l'état déterminé peut être le premier état. Cette valeur prédéterminée peut être fonction du type de corde et de son fabriquant et cette valeur prédéterminée peut être stockée dans un ou plusieurs des marqueurs de radio-identification de la corde 100 tels que décrits ci-après de manière à être récupérée par l'unité électronique 201 pour être utilisée. Ici, l'écart est une valeur positive correspondant à la différence entre la somme des N longueurs effectives déterminées de portions de la corde 100 et N fois la longueur théorique des portions de même longueur théorique. L'écart forme ici l'indicateur d'usure relatif à la longueur de la corde 100 et lorsque l'écart dépasse la valeur prédéterminée l'indicateur d'usure relatif à la longueur de la corde 100 indique que la corde 100 est considérée comme détériorée, sinon l'indicateur d'usure relatif à la longueur de la corde 100 indique que la corde est considérée comme fiable du point de vue de sa longueur. On considère ici qu'une élongation ou un rétrécissement d'une partie seulement de la corde 100 (définie par les N portions pour lesquelles les longueurs effectives ont été déterminées) est représentatif de cette élongation ou de ce rétrécissement pour la totalité de la corde 100. Cette réalisation présente l'avantage de vérifier la longueur de portions de la corde, notamment à chaque utilisation de la corde, dans le but d'informer l'utilisateur de la corde 100 sur l'état de la corde 100.

Dans le cadre de ce premier mode de réalisation, il est possible d'appliquer des traitements statistiques sur les longueurs effectives déterminées de portions de la corde 100. Ces traitements statistiques peuvent être générés au fil des utilisations de la corde 100 pour, par exemple, réaliser une moyenne à utiliser pour déterminer l'indicateur d'usure de la corde 100 ou, par exemple, informer l'utilisateur de la corde 100 sur l'évolution de sa corde.

Il a été décrit ci-dessus l'étape E2 utilisant des longueurs effectives de portions de la corde 100 pour déterminer l'état de la corde 100, notamment choisi entre le premier état et le deuxième état. Alternativement ou en combinaison avec la détermination du premier état ou du deuxième état, l'étape E2 peut déterminer l'état d'indication de la modification de la longueur effective de la corde 100 par rapport à la longueur théorique de la corde 100, par exemple en associant à cet état d'indication une valeur estimée de l'écart entre la longueur théorique de la corde 100 et sa longueur effective, ou en associant à cet état d'indication une valeur estimée de la longueur effective de la corde 100 en utilisant les longueurs effectives déterminées de portions de la corde 100 (ceci supposant que la corde 100 présente une longueur correspondant à la somme de toutes les portions de même longueur théorique de cette même corde 100 pour que les estimations puissent être réalisées).

En relation avec le premier mode de réalisation, par exemple tel qu'illustré en figures 1 à 4, utilisant la détermination de longueurs effectives de portions de la corde 100, il existe un besoin d'élaborer une solution technique permettant à l'unité électronique 201 de détecter les portions de la corde 100 pour lesquelles l'unité électronique 201 doit mesurer/déterminer la longueur effective. Pour répondre à ce besoin, la corde 100 comporte avantageusement des marqueurs 101, 102, 103, 104, 105 (figure 5) agencés le long, c'est-à-dire selon la longueur, de la corde 100 et selon un pas théorique i égal à la longueur théorique des portions de même longueur théorique. Sur la figure 2 seuls les marqueurs 102, 104 sont visibles, et en figures 3 et 4 seuls les marqueurs 102, 103 et 104 sont visibles. Un marqueur au sens de la présente description est au moins un élément détectable, deux marqueurs consécutifs permettant de délimiter une portion de longueur théorique. Autrement dit, les marqueurs 101, 102, 103, 104, 105 sont échelonnés selon la longueur de la corde 100 et selon le pas théorique. En figure 5, les marqueurs 101, 102, 103, 104, 105 sont préférentiellement placés de sorte que les marqueurs 101 et 105 soient agencés à des extrémités longitudinales opposées de la corde 100, et que le marqueur 103 soit un marqueur de milieu de corde 100. Le marqueur de milieu de corde est situé à équidistance, selon la longueur de la corde 100, des extrémités longitudinales opposées de la corde 100 à sa sortie d'usine. Ainsi, voir notamment les figures 3 et 4, l'étape E1-2-1 de détermination de longueurs effectives comporte, pour chaque longueur effective déterminée :
- une étape de détection d'un premier marqueur 102,
- une étape de détection d'un deuxième marqueur 103, notamment consécutif au premier marqueur 102 et théoriquement séparé de ce premier marqueur d'une distance égale au pas théorique,
- une étape de mesure de ladite longueur effective déclenchée lors de la détection du premier marqueur 102 et stoppée lors de la détection du deuxième marqueur 103, en figures 3 et 4 cela correspond à mesurer la distance entre les lignes l₃ et l₂, le résultat de cette étape de mesure correspond à ladite longueur effective à déterminer.

Ces étapes de détection des premier et deuxième marqueurs 102, 103 et l'étape de mesure de la longueur effective de la portion de la corde 100 sont notamment mises en oeuvre par l'unité électronique 201 au cours du défilement de la corde 100 dans le dispositif 200. Les marqueurs permettent d'identifier le début et la fin de chacune des portions, dont la longueur effective doit être mesurée, de la corde 100. Bien entendu, selon le sens de défilement (flèche F1) de la corde 100 et entre deux marqueurs d'extrémité 101, 105 de la corde 100 (figure 5), chaque marqueur 102, 103, 104 est à la fois un marqueur de fin de portion de la corde 100 et un marqueur de début de portion suivante de la corde 100.

Les marqueurs sont détectés de manière efficace par radio-identification.

L'étape de détection du premier marqueur 102 comporte une étape de lecture du premier marqueur 102 par un lecteur de radio-identification, et l'étape de détection du deuxième marqueur 103 comporte une étape de lecture du deuxième marqueur 103 par le lecteur de radio-identification.

Cette solution par lecteur de radio-identification est tout particulièrement adaptée pour fonctionner avec une corde de manière fiable.

De manière plus générale, l'unité électronique 201 2. comporte un lecteur 206 de marqueurs appartenant à la corde 100 (aussi appelé détecteur de marqueur), ce lecteur 206 étant 2. un lecteur de radio-identification pour la lecture de marqueurs de radio-identification. Pour mesurer la longueur effective d'une portion de la corde 100, l'unité électronique 201 peut comporter un galet 207 de mesure entrainé en rotation par le défilement de la corde 100 lors de la coopération entre la corde 100 et l'unité électronique 201. Ainsi, chaque mesure de longueur effective d'une portion correspondante de la corde 100 peut être mise en oeuvre par le galet 207 de mesure entraîné en rotation par la corde 100. Par exemple, le galet 207 de mesure est entraîné en rotation par la corde 100 à sa circonférence et la longueur de la circonférence du galet 207 de mesure étant connue, la mesure de la longueur effective entre deux marqueurs 102, 103 peut être déterminée par acquisition du nombre de tours effectué par le galet 207 et par multiplication de ce nombre de tours par la longueur de la circonférence du galet 207. Dans le cadre d'une vérification faite au cours d'un assurage d'un grimpeur, il est commun que l'assureur fasse des va-et-vient avec la corde 100 pour suivre les mouvements du grimpeur, en ce sens l'unité de électronique 201 peut tenir compte de va-et-vient détectés au niveau du galet pour mesurer correctement la longueur effective de la portion de la corde. Autrement dit, pour déterminer une information relative à la corde 100 représentant la longueur effective d'une de ses portions de longueur théorique connue, il est ici acquis deux données de détection de marqueurs par le lecteur 206, et une donnée issue du galet 207 de mesure.

L'unité de traitement 203 peut comporter des moyens d'analyse, par exemple le code logiciel, configurés pour détecter la présence d'un motif particulier dans une image.

En correspondance à la présence de marqueurs 101, 102, 103, 104, 105 de radio-identification dans la corde 100, chaque détection de marqueur 102, 103 (les premier et deuxième marqueurs dans l'exemple illustré en figure 3 et 4) peut être réalisée par acquisition d'un signal émis par ledit marqueur 102, 103 en réponse à un signal d'interrogation émis par le lecteur de radio-identification, ce signal d'interrogation permettant d'alimenter en énergie ledit marqueur 102, 103 de telle sorte à provoquer l'émission du signal par ledit marqueur. Ainsi, chaque marqueur 102, 103 peut être un composant de radio-identification comportant une puce électronique et une antenne associée à ladite puce électronique pour recevoir et répondre à une requête radiofréquence émise par le lecteur de radio-identification. Un tel composant de radio-identification est aussi communément appelé radio-étiquette, ou tag RFID (RFID correspondant en langue anglaise à « radio frequency identification »), ou encore transpondeur. Le composant de radio-identification peut être à haute fréquence ou à ultra haute fréquence. L'ultra-haute fréquence permet de réduire la taille des antennes du côté du lecteur et du marqueur, ceci étant avantageux pour une intégration de tags RFID dans une corde.

Notamment, le lecteur de radio-identification peut être agencé pour être au contact de la corde 100 lors de la coopération entre la corde 100 et l'unité électronique 201, ceci permet de miniaturiser les marqueurs de la corde 100, notamment en limitant l'encombrement des antennes de ces marqueurs. Par exemple, chaque marqueur peut présenter une épaisseur de 0,7 mm, facilitant ainsi son intégration à la corde 100. L'intégration des marqueurs de radio-identification à la corde 100 peut être telle que ces marqueurs sont agencés, lors de la fabrication de la corde 100, à intervalles réguliers (c'est-à-dire selon le pas théorique) dans la corde 100 soit à l'aide d'un fil support pris dans la corde 100, soit par collage par exemple dans une partie interne de la gaine de la corde 100 ou encore directement dans l'âme en équipant un des brins de l'âme avec ces marqueurs. Le collage est notamment réalisé avec une colle élastique pour accompagner l'élongation de la corde 100. Ce deuxième cas présente notamment les avantages suivants :
- chaque marqueur peut être fixé à un brin de la corde, et être ainsi protégé des agressions extérieures par une gaine de la corde : en comparaison avec le premier cas on évite un risque d'effacement du motif agencé en surface de la corde 100,
- chaque marqueur de radio-identification est adapté pour être télé-alimenté par le lecteur de radio-identification, cela ne nécessite pas d'intégrer une source d'énergie à la corde 100 pour alimenter les marqueurs,
- chaque marqueur peut comporter une ou plusieurs données écrite dans une mémoire qu'il comporte et le marqueur peut transmettre au lecteur la ou les données via le signal émis par ce marqueur (par exemple au moins un des marqueurs de la corde 100, et de préférence chaque marqueur de la corde 100, comporte, dans sa mémoire, le pas théorique, c'est-à-dire la valeur de la longueur théorique de chacune des portions de même longueur théorique).

Ainsi, l'unité électronique 201 comporte le lecteur de radio-identification, et l'unité de traitement 203 peut comporter des moyens adaptés, par exemple le code logiciel, configurés pour détecter un marqueur à chaque lecture, via le lecteur, d'un signal émis par un des marqueurs, et pour déclencher et stopper la mesure de la longueur effective correspondante d'une des portions de la corde 100 via le galet 207 de mesure. Selon une réalisation préférée, l'unité de traitement 203 peut avoir connaissance de la longueur théorique de chacune des portions de la corde via acquisition d'une donnée correspondant à cette valeur par l'unité électronique 201 (notamment par le lecteur de radio-identification), cette donnée acquise étant émise par un marqueur de la corde qui la stocke dans sa mémoire.

De manière générale, applicable aux premier et deuxième cas, l'unité électronique 201 peut comporter le lecteur 206 de marqueurs appartenant à la corde 100, et le galet 207 de mesure de longueur agencé pour être entraîné en rotation par la corde 100 lors du défilement de la corde par rapport à l'unité électronique 201. L'unité électronique 201 peut alors être configurée pour déclencher une mesure, par le galet 207 de mesure, d'une longueur effective d'une portion de la corde 100 lors de la détection du premier marqueur 102 de la corde 100, et stopper cette mesure de distance (ladite distance étant la longueur effective) lors de la détection du deuxième marqueur 103 de la corde 100 (séparé du premier marqueur selon la longueur théorique de la portion), la portion de la corde 100 s'étendant entre les premier et deuxième marqueurs 102, 103. Ceci présente l'avantage de réaliser efficacement une vérification de corde.

De préférence, trois marqueurs de la corde 100 sont des marqueurs spécifiques identifiant respectivement une première extrémité longitudinale de la corde 100, le milieu de la corde 100 et une deuxième extrémité longitudinale de la corde 100 opposée à sa première extrémité longitudinale. Chacun de ces marqueurs spécifiques peut comporter une donnée indiquant la valeur du pas théorique i. Ainsi, si l'unité de traitement 203 n'a pas à sa disposition la longueur théorique des portions de la corde, l'unité électronique 201 peut acquérir cette donnée et le cas échéant transmettre cette donnée à l'unité de traitement 203. Chaque longueur effective mesurée de portion de la corde 100 peut être enregistrée en lui associant la position relative de la portion correspondante (c'est-à-dire la portion pour laquelle cette longueur effective est déterminée) par rapport à l'un quelconque, ou à chacun des trois marqueurs spécifiques ayant été détecté par l'unité électronique 201. En considérant que la corde 100 comporte deux moitiés s'étendant depuis son milieu chacune vers une extrémité longitudinale correspondante de la corde 100, il est possible d'analyser les positions relatives des portions dont la longueur effective est mesurée pour détecter si la corde 100 présente une moitié plus usée que l'autre, l'état de la corde 100 déterminé (étape E2) peut alors être l'état indiquant qu'une moitié de la corde 100 selon sa longueur est plus utilisée que l'autre moitié de la corde 100 en vue d'informer l'utilisateur qu'il devrait préférentiellement solliciter la moitié la moins utilisée de la corde pour homogénéiser son utilisation de la corde 100.

Selon un deuxième mode de réalisation, qui, pris isolément par rapport au premier mode de réalisation, ne fait pas partie de l'invention, illustré à titre d'exemple en figures 1 à 4, pouvant être pris seul ou en combinaison avec le premier mode de réalisation, le diamètre mesuré de la corde 100 peut être pris en compte pour déterminer l'état de la corde 100. En effet, le diamètre de la corde 100 a tendance à augmenter avec le temps du fait de la rétractation de la corde 100 qui peut être liée à l'état de détérioration de la corde 100 en fonction du degré de la rétractation. Par ailleurs, en cas d'usure ou de dégradation de la gaine, le diamètre mesuré de la corde 100 aura tendance à diminuer localement au niveau de cette usure ou dégradation, ainsi la détection d'une diminution du diamètre de la corde 100 peut impliquer la détermination d'un état de la corde indiquant une détérioration de la corde 100. Dès lors, on comprend que le diamètre mesuré de la corde 100 peut être avantageusement utilisé pour déterminer un indicateur d'usure de la corde 100 relatif à son diamètre. Ainsi, selon ce deuxième mode de réalisation, au moins une des informations déterminées est un diamètre de la corde 100 mesuré par l'unité électronique 201, notamment mesurée localement à une portion de la corde, et l'état déterminé de la corde 100 représente une détérioration de la corde 100 (c'est-à-dire que l'état déterminé est l'état de détérioration) lorsque ledit diamètre mesuré de la corde 100 est représentatif d'une usure de la corde 100 risquant notamment de mettre en danger la charge à assurer avec la corde 100. Par exemple, la corde 100 est considérée comme détériorée si son diamètre augmente de plus de 10% par rapport à son diamètre initial de sortie d'usine. Le diamètre initial de la corde 100 peut être stocké dans un marqueur de radio-identification de la corde 100 de sorte à permettre sa comparaison par l'unité de traitement 203, après lecture du marqueur et donc récupération de ce diamètre initial par l'unité de traitement 203, par rapport au diamètre mesuré. Il peut être mesuré par l'unité électronique 201 plusieurs diamètres de la corde 100 pour différentes portions de la corde 100 en vue de la vérifier en plusieurs endroits. Ainsi, le cas échéant, tout ou partie des informations déterminées relatives à la corde 100 peuvent être des diamètres de cette corde 100 mesurés à des endroits différents notamment selon la longueur de la corde 100. Chaque diamètre mesuré de la corde 100 peut être mesuré par un dispositif de mesure 208 de diamètre (figures 3 et 4) comportant, par exemple, au moins un capteur d'ondes mécaniques (par exemple un capteur d'ultrasons). Le dispositif de mesure 208 de diamètre peut être configuré pour mesurer le diamètre de la corde (notamment simultanément) localement selon plusieurs directions transversales à la corde 100 en vue de vérifier si le diamètre de la corde est homogène : le diamètre mesuré localement de la corde 100 utilisé pour déterminer l'état de la corde 100 peut être alors la valeur s'écartant le plus du diamètre initial de la corde 100. Mesurer le diamètre de la corde 100 selon plusieurs directions transversales (notamment à l'aide de plusieurs capteurs d'ondes mécaniques) permet aussi de déterminer localement la forme de la section de la corde 100, cette forme de section de la corde 100 pouvant alors être utilisée pour déterminer l'état de la corde 100 par exemple en permettant de détecter un choc ou un coincement ou un épaississement qu'aurait subi la corde 100 et susceptible de porter préjudice à son intégrité. Le dispositif de mesure 208 de diamètre peut appartenir à l'unité électronique 201 comme représenté en figures 3 et 4 : il y a donc acquisition d'une donnée par le dispositif de mesure 208 de diamètre (étape E1-1), puis détermination du diamètre par une étape correspondante E1-2-2. Chaque diamètre déterminé peut être utilisé par l'étape E2 de détermination de l'état de la corde 100 pour déterminer l'indicateur d'usure de la corde relatif à son diamètre indiquant que la corde 100 est considérée comme détériorée (ou plus généralement pour déterminer l'état de détérioration - c'est-à-dire le deuxième état - de la corde 100) si un écart, entre le diamètre déterminé et le diamètre initial de la corde 100, est strictement supérieur à seuil prédéterminé (par exemple le seuil prédéterminé est égal à 10% du diamètre initial de la corde 100), sinon l'indicateur d'usure relatif à la longueur de la corde indique que la corde est considérée comme fiable du point de vue de son diamètre. L'écart est ici différence entre le diamètre mesuré et le diamètre initial. En complément, un écart inférieur au seuil prédéterminé peut aussi être considéré, par exemple pour détecter un choc, ou un coincement, qu'aurait subi localement la corde.

Le dispositif de mesure 208 de diamètre peut être configuré pour émettre une onde mécanique, et pour mesurer en retour, via le capteur d'ondes mécaniques, une onde mécanique dite « onde réfléchie » résultante de la propagation de l'onde mécanique émise, au sein de la corde 100, dont l'analyse permet d'en déduire le diamètre de la corde 100. Dans la présente description, une onde mécanique est aussi appelée onde élastique. Notamment, le dispositif de mesure 208 de diamètre de la corde permet de réaliser une échographie de la corde 100 pour en déterminer son diamètre.

Selon un troisième mode de réalisation, qui, pris isolément par rapport au premier mode de réalisation, ne fait pas partie de l'invention, illustré à titre d'exemple en figures 1 à 4, pouvant être pris seul ou en combinaison avec le premier mode de réalisation et/ou le deuxième mode de réalisation, on va chercher à vérifier si la corde 100 n'a pas subi d'usure interne ou de dégradation chimique au sein de sa structure interne présentant un risque pour sa fiabilité. Ainsi, pour répondre à ce besoin, l'étape E2 de détermination de l'état de la corde 100 peut comporter une étape de détermination d'un indicateur d'usure interne de la corde 100. En effet, l'âme de la corde 100 peut subir des dégradations lorsqu'elle est soumise à un produit chimique, cette dégradation n'est pas directement visible. Pour détecter ces dégradations, il est nécessaire de sonder la corde 100, par exemple pour vérifier l'état de son âme. En ce sens, l'étape E1 de détermination des informations relatives à la corde 100 peut comporter une étape de sondage de la corde 100, notamment par un dispositif de sondage 209 (figures 3 et 4) appartenant à l'unité électronique 201, de sorte à acquérir (étape E1-1) au moins une donnée (et notamment plusieurs données) dépendante de l'état de la corde 100 en tant qu'information relative à la corde 100. En particulier, cette donnée est relative à la structure interne de la corde 100, notamment d'une portion de la corde. Cette donnée relative à la structure interne de la corde 100 est notamment acquise au cours d'une étape E1-2-3 appartenant à l'étape E1-2 (figure 1). Notamment, le dispositif de sondage 209 peut comporter un capteur d'ondes mécaniques (par exemple un capteur d'ultrasons), ou un capteur d'ondes électromagnétiques. L'état déterminé de la corde 100 (par l'étape E2) peut être un état de détérioration lorsque l'étape de sondage met en avant une usure interne de la corde 100. En particulier, le dispositif de sondage 209 est configuré pour acquérir (via son capteur d'ondes mécaniques ou électromagnétiques) une onde réfléchie, en tant que donnée représentative de l'état de la corde 100 (ou donnée relative à la structure interne), issue d'une onde qu'il a émise. Cette onde réfléchie est représentative d'une détérioration de la corde 100 lorsqu'elle présente une signature qui n'est pas celle attendue par rapport à la signature d'une structure de référence correspondant par exemple à la réponse ultrasonore ou électromagnétique d'une section de corde neuve du type de la corde 100 que l'on vérifie. Autrement dit, le procédé de vérification de la corde 100 peut comporter une émission d'une onde (mécanique ou électromagnétique) par le dispositif de sondage 209 et une mesure d'une onde réfléchie en tant qu'information relative à la corde 100, ladite onde réfléchie étant obtenue en soumettant la corde 100 à l'onde émise, ensuite la signature de l'onde réfléchie est comparée à la signature de la structure de référence d'où il résulte la détermination de l'état de détérioration de la corde 100 lorsque ladite comparaison met en avant une différence entre la signature de l'onde réfléchie et la signature de la structure de référence, cette différence étant alors représentative d'un défaut dans la structure interne de la corde 100. Ainsi, le dispositif de sondage 209 peut être configuré pour réaliser une échographie de la corde 100 et le procédé de vérification peut étudier le résultat de cette échographie à partir d'une échographie de la structure de référence pour détecter, par exemple, une détérioration de la structure interne de la corde 100 indiquant que le deuxième état doit être déterminé par l'étape E2. La donnée acquise au cours de l'étape de sondage peut être représentative d'un défaut dans la structure de la corde 100 comme un gonflement local, une coupure, une inhomogénéité dans l'âme de la corde 100 qui entrainerait la présence, dans l'onde réfléchie acquise par le dispositif de sondage 209, d'un écho non conforme à la signature de la structure de référence. En particulier, chaque donnée déterminée relative à la structure interne de la corde 100 peut être utilisée par l'étape E2 de détermination de l'état de la corde 100 pour déterminer l'indicateur d'usure interne de la corde 100 indiquant que la corde 100 est considérée comme détériorée si le diamètre de la corde a évolué et si la signature de l'onde réfléchie est non conforme à celle attendue, sinon l'indicateur d'usure interne de la corde indique que la corde est considérée comme fiable du point de vue de son usure interne. Bien entendu, plusieurs données relatives à la structure interne de la corde 100 peuvent être acquises par l'unité électronique 201 afin de vérifier la corde 100 en plusieurs endroits. Ainsi, le cas échéant, tout ou partie des informations relatives à la corde 100 peuvent être des données relatives à la structure interne déterminées à des endroits différents selon la longueur de la corde 100.

Avantageusement, les indicateurs d'usure peuvent être déterminés au cours de l'étape E2 de détermination de l'état de la corde 100, si au moins l'un de ces indicateur d'usure indique que la corde 100 est considérée comme détériorée, alors l'état de détérioration (deuxième état) de la corde 100 est déterminé par l'étape E2, si tous les indicateurs indiquent que la corde est fiable alors le premier état est déterminé.

Il a été évoqué ci-dessus que l'état de la corde 100 pouvait être déterminé à plusieurs reprises au cours de la durée de vie de la corde 100. Par exemple, lors d'une séance d'escalade, la corde 100 est utilisée à plusieurs reprises de sorte qu'au cours de la même séance d'escalade la longueur effective de la corde va évoluer, sans pour autant que la corde 100 perde en fiabilité car un étirement de la corde 100 au cours d'une séance d'escalade est normal du fait qu'elle soit soumise à des chutes du grimpeur et/ou au poids du grimpeur lorsque celui-ci redescend au sol suspendu à la corde 100. Au terme de la séance d'escalade, une période de repos va permettre à la corde 100, et donc à sa matière, de reprendre forme. Ainsi préférentiellement pour éviter une mauvaise détection du deuxième état, l'étape E1 de détermination d'informations relatives à la corde 100 est mise en oeuvre après une période de repos de la corde 100, notamment de durée minimale comprise entre 1 heure et 4 heures. Autrement dit, chaque étape E1 de détermination d'informations est séparée de chaque autre étape E1 de détermination d'informations d'une durée minimale d'inutilisation de la corde supérieure ou égale à 1 heure. Une telle durée minimale est tout particulièrement adaptée pour le repos des cordes dynamiques utilisées dans une activité d'escalade. En particulier, pour répondre au besoin d'inhiber lorsqu'il le faut la mise en oeuvre de l'étape E1, la corde 100 est utilisée à plusieurs reprises de telle sorte que la corde 100 défile par rapport à l'unité électronique 201 à chaque nouvelle utilisation de la corde 100, et le procédé de vérification comporte une étape de comparaison, notamment mise en oeuvre par l'unité électronique 201, de la durée minimale de période de repos avec une durée de séparation entre la dernière utilisation de la corde 100 et la nouvelle utilisation de la corde 100 d'où il résulte l'inhibition de la mise en oeuvre de l'étape E1 de détermination d'informations relatives à la corde 100 si ladite durée de séparation est strictement inférieure à la durée minimale de période de repos. Dans le cas contraire, l'étape E1 peut être mise en oeuvre. Par exemple, l'unité électronique 201 peut lire un marqueur, notamment de radio-identification, de la corde 100 d'où il résulte une génération, notamment par l'unité de traitement 203, d'une datation courante correspondant à une nouvelle utilisation de la corde 100 et une lecture dans une mémoire (par exemple dans une mémoire 214 de l'unité de traitement 203 comme visible en figures 2, 3 et 4) d'une datation précédente correspondant à la datation de la dernière utilisation de la corde, cette datation précédente peut alors être comparée à la datation courante pour vérifier si la durée minimale de période de repos est respectée. Bien entendu, à chaque nouvelle utilisation de la corde, l'unité de traitement peut remplacer, après la comparaison, la datation précédente par la datation courante. Le cas échéant, la mémoire stockant la datation précédente peut être celle du marqueur de la corde 100 dont la lecture provoque la génération de la datation courante, ceci permet d'utiliser différentes unités électroniques lors d'utilisations différentes de la corde sans perdre l'information permettant de déterminer la durée de séparation.

La figure 6 illustre une réalisation particulière du dispositif de vérification 200 coopérant avec la corde 100 (défilement de la corde selon la flèche F1) notamment munie de marqueurs 102, 104. Le dispositif de vérification 200 comporte une première partie 210 et une deuxième partie 211. La première partie 210 comporte le galet 207 de mesure, et est configurée pour être assemblée à la deuxième partie 211 formée par le téléphone intelligent 204 pouvant comporter le lecteur 206 de radio-identification de type NFC (pour « Near Field Communication » en langue anglaise ou communication en champ proche en français) et l'unité de traitement 203. Alternativement, la première partie 210 peut comporter le lecteur 206 et l'unité de traitement 203 lorsque le lecteur 206 est d'un type différent de NFC comme un lecteur à ultra haute fréquence qui n'est généralement pas intégré au téléphone intelligent. L'unité électronique 201 peut alors le cas échéant être répartie dans les première et deuxième parties 210, 211 du dispositif de vérification 200. Le téléphone intelligent 204 et la première partie 210 peuvent communiquer sans fil notamment par BLE. Le téléphone intelligent 204 peut comporter, lorsque le lecteur 206 est de type NFC intégré au téléphone intelligent 204, un code logiciel adapté pour la mise en oeuvre des étapes E1 et E2 et pour afficher sur l'écran 205 du téléphone intelligent l'état déterminé de la corde. Par exemple, il peut être affiché sur l'écran « Corde OK » si l'état déterminé (étape E2) correspond au premier état évoqué ci-avant, ou « Corde à changer » si l'état déterminé (étape E2) correspond au deuxième état évoqué ci-avant. Les données acquises par le galet de mesure 207 peuvent être transmise par un émetteur 212 de la première partie 201 à un récepteur 213 de la deuxième partie 211 notamment pour être traitées par l'unité de traitement 203.

De manière générale applicable à toutes les réalisations du dispositif de vérification 200, ce dernier peut comporter un élément de diffusion d'un signal permettant de prévenir une personne (par exemple le grimpeur ou l'assureur) de l'état de la corde 100. Notamment, le signal est diffusé au moins lorsque l'état déterminé de la corde 100 est l'état de détérioration de la corde 100. Bien entendu, le signal peut aussi être diffusé pour informer que la corde 100 est encore fiable. Dans l'exemple des figures 4 et 6, l'élément de diffusion du signal est l'écran 205 du téléphone intelligent 204. Le cas échant, l'élément de diffusion peut aussi diffuser un signal indiquant qu'il faut changer de moitié de corde utilisée ou indiquant une valeur de la modification de la longueur effective de la corde par rapport à sa longueur théorique. Ainsi, le signal diffusé peut différer (en couleur ou en son) en fonction de l'information à diffuser, notamment de l'état de la corde que l'on souhaite communiquer. Pour diffuser le signal, il peut être utilisé un diffuseur de signal pouvant comporter un haut-parleur et/ou un avertisseur sonore (par exemple un « buzzer » en langue anglaise), et/ou un vibreur, et/ou une diode électroluminescente : ces composants présentent l'avantage d'être aisément intégrables au dispositif de vérification 200 tout en présentant une ergonomie satisfaisante. En figures 2 à 3, l'élément de diffusion du signal est représenté par la référence 215. Ainsi, de manière générale, le procédé de vérification peut comporter une étape de diffusion E3 d'un signal représentatif de l'état déterminé (figure 1) notamment de sorte que l'interprétation du signal permette à l'utilisateur de connaitre sans ambiguïté l'état déterminé de la corde 100.

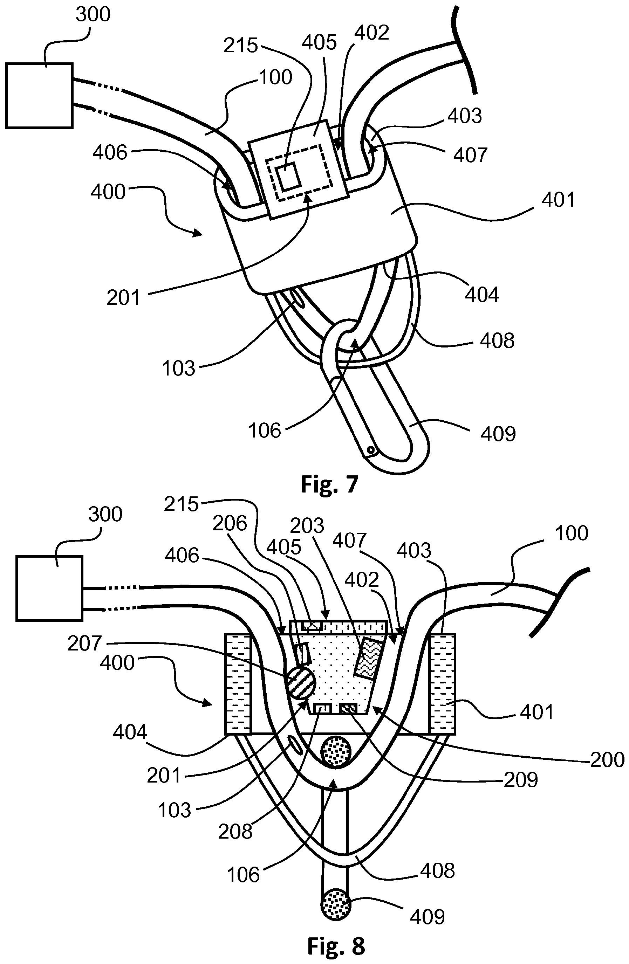

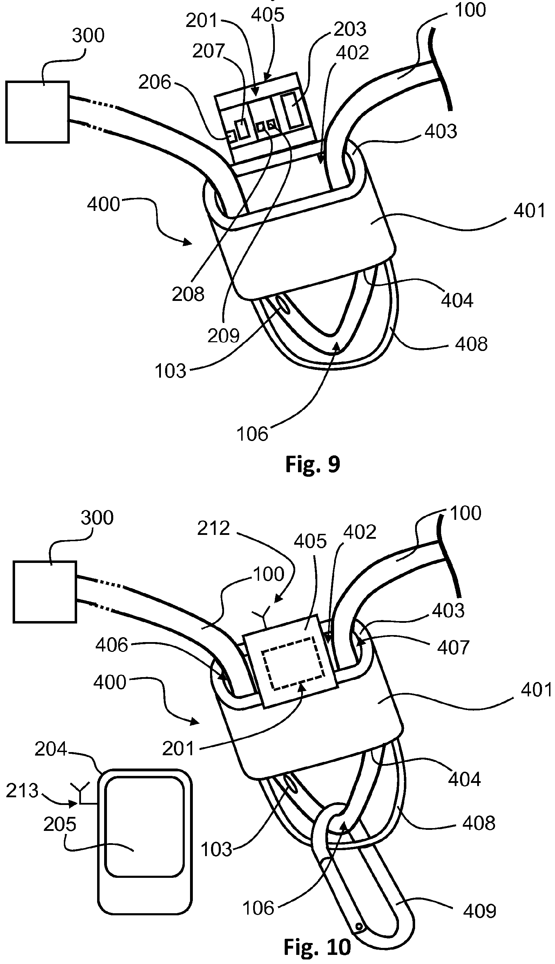

Au sens de la présente description, et comme illustré à titre d'exemple en figures 7 à 10, la corde 100, notamment équipée de marqueurs 103, peut être destinée à assurer la charge 300, par exemple le grimpeur. Typiquement, en activité d'escalade, la chaîne d'assurage peut être la suivante : le grimpeur 300 est relié à la corde 100, et le défilement de la corde 100 est contrôlé par un dispositif d'assurage 400 relié à une personne appelée assureur. Un tel dispositif d'assurage 400 est aussi appelé dispositif d'assurage 400 configuré pour contrôler le défilement de la corde 100. Par « contrôle du défilement de la corde 100 », il est entendu que le dispositif d'assurage 400 concerné permet d'accélérer, de ralentir, ou de bloquer le défilement de la corde 100 qui le traverse notamment en jouant sur les frottements entre la corde 100 et le dispositif d'assurage 400. Le dispositif d'assurage 400 peut comporter un corps rigide 401 muni d'un trou traversant 402 reliant un premier côté 403 du corps rigide 401 à un deuxième côté 404 du corps rigide 401. Un organe mobile 405 appartenant au dispositif d'assurage 400 est monté, de préférence à pivotement, sur le corps rigide 401 de sorte à adopter :
- une première position (figure 9), par rapport au corps rigide 401, autorisant l'insertion d'une partie coudée 106 de la corde 100 dans le trou traversant 402,
- une deuxième position (figures 7, 8 et 10), par rapport au corps rigide 401, dans laquelle ledit organe mobile 405 est verrouillé au corps rigide 401 (par exemple à l'aide d'un crochet de l'organe mobile 405 venant s'accrocher à un ergot du corps rigide 401) pour délimiter, avec le corps rigide 401, un premier passage 406 pour corde 100 et un deuxième passage 407 pour corde 100, les premier et deuxième passages 406, 407 étant agencés de part et d'autre de l'organe mobile 405 positionné et maintenu dans sa deuxième position.

L'organe mobile 405 peut comporter l'unité électronique 201, ceci permettant de la placer à proximité de la corde 100 pour favoriser la coopération entre la corde 100 et l'unité électronique 201. Le dispositif d'assurage représenté en figures 7 à 10 est à anse de retenue 408 solidaire du corps rigide 401 et destinée à coopérer avec un mousqueton 409, le mousqueton étant à relier à un baudrier ou à un harnais, pour permettre le contrôle du défilement de la corde 100. Le procédé de vérification est préférentiellement mis en oeuvre lors de l'assurage du grimpeur afin de prévenir en début de séance d'escalade de l'état de la corde. En ce sens, le dispositif d'assurage 400 peut comporter le dispositif de vérification 200 de la corde dont au moins l'unité électronique 201 peut être intégrée à l'organe mobile 405. Selon l'exemple des figures 7 à 10, le trou traversant 402 permet de délimiter, avec l'organe mobile 405, l'ouverture du dispositif de vérification 200 permettant de s'assurer d'une coopération adaptée de la corde 100 avec l'unité électronique 201.

Il a été décrit ci-avant un type de dispositif d'assurage 400 ayant une fonction de contrôle du défilement de la corde 100 et comportant le dispositif de vérification. Alternativement, le dispositif de vérification peut être intégré, au moins en partie à une dégaine ou à un mousqueton de dégaine traversé par la corde 100 et servant de point d'ancrage fixé à la paroi à escalader.

Ainsi, de manière générale, l'invention est aussi relative à un dispositif pour chaîne d'assurage d'une charge à l'aide d'une corde. Ce dispositif pour chaîne d'assurage comportant un passage pour la corde 100 et comportant le dispositif de vérification 200 de la corde 100. La chaîne d'assurage correspond notamment à tout ce qui se trouve entre le corps du grimpeur et le corps de l'assureur. Ceci présente l'avantage de réaliser la vérification de la corde au cours de l'assurage de la charge.

Selon un mode de réalisation du dispositif d'assurage 400 illustré en figures 7 à 9, l'organe mobile 405 comporte l'unité électronique 201 (représentée schématiquement en pointillé en figure 7 car non visible directement) munie de l'unité de traitement 203, du galet 207 de mesure, du lecteur 206, du dispositif de mesure 208 de diamètre, du dispositif de sondage 209, et de l'élément de diffusion 215 du signal, ceci présente l'avantage d'une solution intégrée diminuant l'encombrement du dispositif d'assurage qui présente alors en outre une vérification de la corde participant ainsi à un assurage en sécurité de la charge.

Selon un autre mode de réalisation du dispositif d'assurage 400 illustré en figure 10, l'organe mobile 405 comporte l'unité électronique 201 (visible en pointillé) munie de l'unité de traitement, du galet de mesure, du lecteur, du dispositif de mesure de diamètre et du dispositif de sondage, et d'un émetteur 212 sans fil permettant d'envoyer l'état de la corde déterminé par l'unité électronique 201. L'unité électronique 201 comporte notamment une batterie pour alimenter ses composants. Par ailleurs, le dispositif d'assurage 400 comporte un module annexe, comme par exemple un téléphone intelligent 204, formant une IHM (Interface Homme Machine), muni d'un récepteur 213 sans fil pour réceptionner des données envoyées par l'unité électronique 201 (notamment l'état déterminé). Les émetteur 212 et récepteur 213 sans fil sont notamment aptes à former une liaison BLE. Le téléphone intelligent 204 peut alors provoquer l'affichage de l'état de la corde 100 sur son écran 205. Ceci présente l'avantage de disposer d'une IHM améliorée.

De préférence, le dispositif de vérification 200 est autonome, en ce sens il dispose d'une ou plusieurs batteries pour alimenter ses composants et mettre en oeuvre les étapes E1, E2. Afin de limiter la consommation en énergie du dispositif de vérification, la mise en route du dispositif de vérification peut être activée par le passage de l'organe mobile 405 dans sa deuxième position. Cette mise en route peut être activée à l'aide d'un interrupteur à lames souples (aussi connu sous la dénomination interrupteur reed ou sous le sigle ILS).

De manière générale, le dispositif de mesure 208 de diamètre et le dispositif de sondage 209 peuvent être inclus dans un même composant, mais proposent des fonctions et traitements différents. Par exemple, le dispositif de mesure 208 de diamètre et le dispositif de sondage 209 partage un même émetteur à ultrason et un même capteur à ultrason, cependant l'onde réfléchie, captée par le capteur à ultrason et issue d'une onde émise par l'émetteur à ultrason, est traitée d'une première manière par le dispositif de mesure 208 de diamètre et d'une deuxième manière, différente de la première manière, par le dispositif de sondage 209.

Dans la présente description, tout ce qui s'applique au dispositif de vérification peut s'appliquer au procédé de vérification et inversement.

La présente invention présente notamment une application industrielle car son objet peut être fabriqué, et notamment peut être utilisé dans le domaine de l'escalade ou plus généralement dans tout type de domaine nécessitant d'assurer une charge en hauteur.

## Revendications

1. Procédé de vérification d'une corde (100), la corde (100) comportant :
• une pluralité de portions différentes ayant une même longueur théorique,
• des marqueurs (101, 102, 103, 104, 105) agencés selon la longueur de la corde (100) et selon un pas théorique égal à la longueur théorique,
le procédé de vérification comportant :
• une étape (E1) de détermination d'informations relatives à la corde (100) par un dispositif de vérification (200) comportant une unité électronique (201), au moins deux des informations déterminées étant issues d'une coopération de l'unité électronique (201) avec respectivement deux portions différentes de la corde (100),
• une étape (E2) de détermination d'un état de la corde (100) en prenant en compte les informations déterminées,
l'étape (E1) de détermination d'informations relatives à la corde (100) comportant une étape (E1-2-1) de détermination de longueurs effectives de portions différentes de même longueur théorique en tant qu'informations relatives à la corde (100), l'étape (E1-2-1) de détermination de longueurs effectives comportant, pour chaque longueur effective déterminée :
• une étape de détection d'un premier marqueur (102),
• une étape de détection d'un deuxième marqueur (103),
• une étape de mesure de ladite longueur effective déclenchée lors de la détection du premier marqueur (102) et stoppée lors de la détection du deuxième marqueur (103),
où l'étape de détection du premier marqueur (102) comporte une étape de lecture du premier marqueur (102) par un lecteur de radio-identification, et l'étape de détection du deuxième marqueur (103) comporte une étape de lecture du deuxième marqueur (103) par le lecteur de radio-identification.

2. Procédé de vérification selon la revendication 1, **caractérisé en ce que** l'étape (E2) de détermination de l'état de la corde (100) comporte une étape de comparaison des longueurs effectives déterminées par rapport à la longueur théorique de sorte que l'état déterminé de la corde (100) est un état de détérioration de la corde (100) lorsqu'il résulte qu'une ou plusieurs des longueurs effectives déterminées présentent un écart, par rapport à la longueur théorique, strictement supérieur à une valeur prédéterminée.

3. Procédé de vérification selon la revendication 1, **caractérisé en ce que** :
• N longueurs effectives sont déterminées, avec N un entier positif supérieur ou égal à 2,
• l'étape (E2) de détermination de l'état de la corde (100) comporte une étape de détermination d'un écart entre la somme des N longueurs effectives déterminées et N fois la longueur théorique, l'état déterminé de la corde (100) étant un état de détérioration de la corde (100) lorsque l'écart est strictement supérieur à une valeur prédéterminée, de préférence la valeur prédéterminée étant égale à 10% de N fois la longueur théorique.

4. Procédé de vérification selon l'une quelconque des revendications précédentes, **caractérisé en ce qu'**une des informations déterminées est un diamètre de la corde mesuré par l'unité électronique (201), et **en ce que** l'état déterminé de la corde (100) est un état de détérioration de la corde (100) lorsque le diamètre mesuré est représentatif d'une usure de la corde (100).

5. Procédé de vérification selon l'une quelconque des revendications précédentes, **caractérisé en ce que** l'étape (E1) de détermination des informations relatives à la corde (100) comporte une étape de sondage de la corde (100) de sorte à acquérir au moins une donnée dépendante de l'état de la corde (100) en tant qu'information relative à la corde (100), l'état déterminé de la corde (100) étant un état de détérioration lorsque l'étape de sondage met en avant une usure de la structure interne de la corde (100).

6. Procédé de vérification selon l'une quelconque des revendications précédentes, **caractérisé en ce que** l'étape de détermination (E1) d'informations relatives à la corde (100) est mise en oeuvre après une période de repos de la corde (100).

7. Procédé de vérification selon la revendication précédente, **caractérisé en ce que** la corde (100) est utilisée à plusieurs reprises de telle sorte que la corde (100) défile par rapport à l'unité électronique (201) à chaque nouvelle utilisation de la corde (100), et **en ce que** l'unité électronique (201) met en oeuvre une étape de comparaison d'une durée minimale de période de repos avec une durée de séparation entre la dernière utilisation de la corde (100) et la nouvelle utilisation de la corde (100) d'où il résulte l'inhibition de la mise en oeuvre de l'étape (E1) de détermination d'informations relatives à la corde (100) si ladite durée de séparation est strictement inférieure à la durée minimale de période de repos.

8. Dispositif de vérification (200) d'une corde (100), ledit dispositif de vérification (200) comportant une unité électronique (201) apte à coopérer avec la corde (100) de telle sorte que le dispositif de vérification (200) est configuré pour :
• déterminer des informations relatives à la corde (100) telles qu'au moins deux des informations déterminées sont issues d'une coopération de l'unité électronique (201) avec respectivement deux portions différentes de la corde (100),
• déterminer un état de la corde (100) en prenant en compte les informations déterminées,
où ledit dispositif comporte les moyens nécessaires pour la mise en oeuvre de l'étape (E1) de détermination d'informations relatives à la corde (100) et de l'étape (E2) de détermination de l'état de la corde (100) d'un procédé de vérification selon l'une quelconque des revendications précédentes, l'unité électronique (201) comportant un lecteur (206) de marqueurs appartenant à la corde (100), ledit lecteur (206) de marqueurs étant un lecteur de radio-identification.

9. Dispositif de vérification (200) selon la revendication précédente, **caractérisé en ce que** l'unité électronique (201) comporte un galet (207) de mesure de longueur agencé pour être entraîné en rotation par la corde lors d'un défilement de la corde (100) par rapport à l'unité électronique (201), l'unité électronique (201) étant configurée pour :
• déclencher une mesure, par le galet (207) de mesure, d'une longueur effective d'une portion de la corde (100) lors de la détection d'un premier marqueur (102) de la corde (100), et
• stopper cette mesure de longueur effective lors de la détection d'un deuxième marqueur (103) de la corde (100),
la portion de la corde s'étendant entre les premier et deuxième marqueurs (102, 103).

10. Dispositif pour chaîne d'assurage (400) d'une charge à l'aide d'une corde, le dispositif pour chaîne d'assurage comportant un passage pour la corde (100), **caractérisé en ce qu'**il comporte un dispositif de vérification (200) de la corde (100) selon l'une quelconque des revendications 8 à 9.

## Patentansprüche

1. Verfahren zur Prüfung eines Seils (100), wobei das Seil (100) beinhaltet:
• eine Vielzahl von unterschiedlichen Abschnitten, die eine gleiche theoretische Länge haben,
• Markierungen (101, 102, 103, 104, 105), die entlang der Länge des Seils (100) und gemäß einem theoretischen Abstand, der gleich der theoretischen Länge ist, angeordnet sind,
wobei das Prüfungsverfahren beinhaltet:
• einen Schritt (E1) zur Ermittlung von Informationen in Bezug auf das Seil (100) durch eine Prüfungsvorrichtung (200), die eine elektronische Einheit (201) beinhaltet, wobei mindestens zwei der ermittelten Informationen aus einer Kooperation der elektronischen Einheit (201) mit jeweils zwei unterschiedlichen Abschnitten des Seils (100) stammen,
• einen Schritt (E2) zur Ermittlung eines Zustands des Seils (100) unter Berücksichtigung der ermittelten Informationen,
wobei der Schritt (E1) zur Ermittlung von Informationen in Bezug auf das Seil (100) einen Schritt (E1-2-1) zur Ermittlung von effektiven Längen unterschiedlicher Abschnitte gleicher theoretischer Länge als Information in Bezug auf das Seil (100) beinhaltet, wobei der Schritt (E1-2-1) zur Ermittlung von effektiven Längen beinhaltet, für jede ermittelte effektive Länge:
• einen Schritt zur Erfassung einer ersten Markierung (102),
• einen Schritt zur Erfassung einer zweiten Markierung (103),
• einen Schritt zur Messung der effektiven Länge, der bei der Erfassung der ersten Markierung (102) ausgelöst wird, und bei der Erfassung der zweiten Markierung (103) gestoppt wird,
wobei der Schritt zur Erfassung der ersten Markierung (102) einen Schritt zur Lesung der ersten Markierung (102) durch ein Funkwellen-Identifikationslesegerät beinhaltet, und der Schritt zur Erfassung der zweiten Markierung (103) einen Schritt zur Lesung der zweiten Markierung (103) durch ein Funkwellen-Identifikationslesegerät beinhaltet.

2. Prüfungsverfahren nach Anspruch 1, **dadurch gekennzeichnet, dass** der Schritt (E2) zur Ermittlung des Zustands des Seils (100) einen Schritt zum Vergleich der ermittelten effektiven Längen mit der theoretischen Länge beinhaltet, so dass der ermittelte Zustand des Seils (100) ein Zustand der Verschlechterung des Seils (100) ist, wenn sich ergibt, dass eine oder mehrere der ermittelten effektiven Längen eine Abweichung von der theoretischen Länge aufweisen, die streng größer als ein ermittelter Wert ist.

3. Prüfungsverfahren nach Anspruch 1, **dadurch gekennzeichnet, dass**:
• N effektive Längen ermittelt werden, wobei N eine positive Ganzzahl größer oder gleich 2 ist,
• der Schritt (E2) zur Ermittlung des Zustands des Seils (100) einen Schritt zur Ermittlung einer Abweichung zwischen der Summe der N ermittelten effektiven Längen und dem N-fachen der theoretischen Länge beinhaltet, wobei der ermittelte Zustand des Seils (100) ein Zustand der Verschlechterung des Seils (100) ist, wenn die Abweichung streng größer als ein ermittelter Wert ist, wobei der ermittelte Wert vorzugsweise gleich 10 % des N-fachen der theoretischen Länge ist.

4. Prüfungsverfahren nach einem der vorhergehenden Ansprüche, **dadurch gekennzeichnet, dass** eine der ermittelten Informationen ein Seildurchmesser ist, der von der elektronischen Einheit (201) gemessen wurde, und dass der ermittelte Zustand des Seils (100) ein Zustand der Verschlechterung des Seils (100) ist, wenn der gemessene Durchmesser für einen Verschleiß des Seils (100) repräsentativ ist.

5. Prüfungsverfahren nach einem der vorhergehenden Ansprüche, **dadurch gekennzeichnet, dass** der Schritt (E1) zur Ermittlung der Informationen in Bezug auf das Seil (100) einen Schritt der Sondierung des Seils (100) beinhaltet, um mindestens eine Angabe zu erlangen, die vom Zustand (100) des Seils abhängt als Information in Bezug auf das Seils (100), wobei der ermittelte Zustand des Seils (100) ein Zustand der Verschlechterung ist, wenn der Sondierungsschritt einen Verschleiß der inneren Struktur des Seils (100) anzeigt.

6. Prüfungsverfahren nach einem der vorhergehenden Ansprüche, **dadurch gekennzeichnet, dass** der Schritt zur Ermittlung (E1) von Informationen in Bezug auf das Seil (100) nach einer Ruhephase des Seils (100) durchgeführt wird.

7. Prüfungsverfahren nach dem vorhergehenden Anspruch, **dadurch gekennzeichnet, dass** das Seil (100) wiederholt so verwendet wird, dass das Seil (100) bei jeder neuen Verwendung des Seils (100) an der elektronischen Einheit (201) vorbeiläuft, und dass die elektronische Einheit (201) einen Schritt des Vergleichs einer minimalen Dauer der Ruhephase mit einer Dauer der Separation zwischen der letzten Verwendung des Seils (100) und der neuen Verwendung des Seils (100) durchführt, wodurch sich die Inhibition der Durchführung des Schritts (E1) zur Ermittlung von Informationen in Bezug auf das Seil (100) ergibt, wenn die Dauer der Separation streng kleiner als die minimale Dauer der Ruhephase ist.

8. Prüfungsvorrichtung (200) eines Seils (100), wobei die Prüfungsvorrichtung (200) eine elektronische Einheit (201) beinhaltet, die geeignet ist, um mit dem Seil (100) so zu kooperieren, dass die Prüfungsvorrichtung (200) konfiguriert ist zum:
• Ermitteln von Informationen in Bezug auf das Seil (100), so dass mindestens zwei der ermittelten Informationen aus einer Kooperation der elektronischen Einheit (201) mit jeweils zwei unterschiedlichen Abschnitten des Seils (100) stammen,
• Ermitteln eines Zustands des Seils (100) unter Berücksichtigung der ermittelten Informationen,
wobei die Vorrichtung die Mittel beinhaltet, die zur Durchführung des Schritts (E1) zur Ermittlung von Informationen in Bezug auf das Seil (100) erforderlich sind und des Schritts (E2) zur Ermittlung des Zustands des Seils (100) eines Prüfungsverfahrens nach einem der vorhergehenden Ansprüche, wobei die elektronische Einheit (201) ein Lesegerät (206) von Markierungen beinhaltet, die zum Seil (100) gehören, wobei das Lesegerät (206) von Markierungen ein Funkwellen-Identifikationslesegerät ist.

9. Prüfungsvorrichtung (200) nach dem vorhergehenden Anspruch, **dadurch gekennzeichnet, dass** die elektronische Einheit (201) eine Rolle (207) zur Längenmessung beinhaltet, die angeordnet ist, um durch das Seil in Rotation versetzt zu werden während dem Durchlauf des Seils (100) an der elektronischen Einheit (201) vorbei, wobei die elektronische Einheit (201) konfiguriert ist zum:
• Auslösen einer Messung, durch die Messrolle (207), einer effektiven Länge eines Seilabschnitts (100) bei der Erfassung einer ersten Markierung (102) des Seils (100), und
• Stoppen dieser Messung der effektiven Länge bei der Erfassung einer zweiten Markierung (103) des Seils (100),
wobei sich der Seilabschnitt zwischen der ersten und der zweiten Markierung (102, 103) erstreckt.

10. Vorrichtung für eine Kette zur Sicherung (400) einer Last unter Verwendung eines Seils, wobei die Sicherungskettenvorrichtung einen Durchgang für das Seil (100) beinhaltet, **dadurch gekennzeichnet, dass** sie eine Vorrichtung zur Prüfung (200) des Seils (100) nach einem der Ansprüche 8 bis 9 beinhaltet.

## Claims

1. A method for checking a rope (100), the rope (100) including:
• a plurality of different portions having the same theoretical length,
• markings (101, 102, 103, 104, 105) arranged over the length of the rope (100) and according to a theoretical pitch equal to the theoretical length,
the checking method including:
• a step (E1) of determining information relating to the rope (100) by a checking device (200) including an electronic unit (201), at least two of the determined information being derived from a cooperation of the electronic unit (201) with respectively two different portions of the rope (100),
• a step (E2) of determining a condition of the rope (100) by taking the determined information into account,
step (E1) of determining information relating to the rope (100) including a step (E1-2-1) of determining effective lengths of different portions of the same theoretical length as information relating to the rope ( 100), step (E1-2-1) of determining effective lengths including, for each determined effective length:
• a step of detecting a first marking (102),
• a step of detecting a second marking (103),
• a step of measuring said effective length triggered upon detection of the first marking (102) and stopped upon detection of the second marking (103),
where the step of detecting the first marking (102) includes a step of reading the first marking (102) by a radio-identification reader, and the step of detecting the second marking (103) includes a step of reading the second marking (103) by the radio-identification reader.

2. The checking method according to claim 1, **characterized in that** step (E2) of determining the condition of the rope (100) includes a step of comparing the determined effective lengths with respect to the theoretical length so that the determined condition of the rope (100) is a condition of deterioration of the rope (100) when it results that one or more of the determined effective lengths feature(s) a discrepancy, with respect to the theoretical length, strictly greater than a predetermined value.

3. The checking method according to claim 1, **characterized in that**:
• N effective lengths are determined, with N a positive integer greater than or equal to 2,
• step (E2) of determining the condition of the rope (100) includes a step of determining a discrepancy between the sum of the N determined effective lengths and N times the theoretical length, the determined condition of the rope (100) being a condition of deterioration of the rope (100) when the discrepancy is strictly greater than a predetermined value, preferably the predetermined value being equal to 10% of N times the theoretical length.

4. The checking method according to any one of the preceding claims, **characterized in that** one of the determined information is a diameter of the rope measured by the electronic unit (201), and **in that** the determined condition of the rope (100) is a condition of deterioration of the rope (100) when the measured diameter reflects wear of the rope (100).

5. The checking method according to any one of the preceding claims, **characterized in that** step (E1) of determining the information relating to the rope (100) includes a step of probing the rope (100) so as to acquire at least one data dependent on the condition of the rope (100) as information relating to the rope (100), the determined condition of the rope (100) being a condition of deterioration when the probing step reveals wear of the inner structure of the rope (100).

6. The checking method according to any one of the preceding claims, **characterized in that** step (E1) of determining information relating to the rope (100) is implemented after a period of rest of the rope (100).

7. The checking method according to the preceding claim, **characterized in that** the rope (100) is used several times such that the rope (100) runs relative to the electronic unit (201) with each new use of the rope ( 100), and **in that** the electronic unit (201) implements a step of comparing a rest period minimum duration with a separation duration between the last use of the rope (100) and the new use of the rope (100) thereby resulting in the inhibition of the implementation of step (E1) of determining information relating to the rope (100) if said separation duration is strictly shorter than the rest period minimum duration.

8. A device (200) for checking a rope (100), said checking device (200) including an electronic unit (201) able to cooperate with the rope (100) such that the checking device (200) is configured to:
• determine information relating to the rope (100) such that at least two of the determined information are derived from a cooperation of the electronic unit (201) with respectively two different portions of the rope (100),
• determine a condition of the rope (100) by taking account of the determined information,
where said device includes the means necessary for the implementation of step (E1) of determining information relating to the rope (100) and of step (E2) of determining the condition of the rope (100) of a checking method according to any one of the preceding claims, the control unit (201) including a reader (206) of markings belonging to the rope (100), said markings reader (206) being a radio-identification reader.

9. The checking device (200) according to the preceding claim, **characterized in that** the electronic unit (201) includes a length measuring roller (207) arranged so as to be driven in rotation by the rope when the rope (100) runs relative to the electronic unit (201), the electronic unit (201) being configured to:
• trigger a measurement, by the measuring roller (207), of an effective length of a portion of the rope (100) upon detection of a first marking (102) of the rope (100), and
• stop this effective length measurement upon detection of a second marking (103) of the rope (100),
the portion of the rope extending between the first and second markings (102, 103).

10. A device for a chain (400) for safeguarding a load using a rope, the device for a safety chain including a passage for the rope (100), **characterized in that** it includes a device (200) for checking the rope (100) according to any one of claims 8 to 9.
